# EUROPEAN PATENT SPECIFICATION

(11) **EP 2 269 881 B1**
(45) Date of publication and mention of the grant of the patent: **14.09.2016**
(21) Application number: 10168080.9
(22) Date of filing: 01.07.2010
(51) Int. Cl.: B60T 8/40, F04B 17/03

(54) **Vehicle brake hydraulic pressure controller**
Hydraulisches Drucksteuergerät für Fahrzeugbremsen
Dispositif de commande de pression hydraulique pour freins de véhicule

(30) Priority: 02.07.2009 JP 2009157430
(43) Date of publication of application: 05.01.2011
(73) Proprietor: Nissin Kogyo Co., Ltd., Ueda-shi Nagano-ken 386-8505 (JP)
(72) Inventor: Nakamura, Motoyasu, Nagano (JP); Kodama, Takuro, Nagano (JP)
(74) Representative: Hoffmann Eitle

(56) References cited:
- JP-A- 7 156 772
- JP-A- 11 139 284
- JP-A- 2001 186 739
- JP-A- 2008 168 895
- US-A- 5 895 207

## Description

### BACKGROUND

### 1. Field of the Invention

The present invention relates to a vehicle brake hydraulic pressure controller.

### 2. Description of the Related Art

Such a structure as that disclosed in JP-A-2008-168895 is known as the installation structure of a vehicle brake hydraulic pressure controller for installing a motor in the base thereof. With this conventional installation structure, two bolts are screwed into the base at two points around the outer circumferential portion of the motor so that the motor is supported at the two points. These two support points are disposed so as to be symmetrical with respect to the center of the rotation shaft of the motor. In other words, the center of the rotation shaft of the motor is located on the straight line connecting the two support points.

However, since the components of the motor, such as a motor bus bar, terminals, choke coils, brushes and pick tails, are not necessarily disposed so as to be symmetrical with respect to the center of the rotation shaft of the motor, the center of gravity of the motor is located at a position away from the center of the rotation shaft of the motor in many cases.

For this reason, in the above-mentioned conventional structure, the center of gravity of the motor is displaced from the straight line connecting the two support points in some cases, and there is a problem associated with a fear of causing vibration and noise.

An anti-lock brake control device of vehicle and formation of mount shaft is also disclosed in JP7-156772A.

### SUMMARY OF THE INVENTION

The present invention is intended to provide a vehicle brake hydraulic pressure controller capable of suppressing vibration and noise.

According to the present invention, there is provided a vehicle brake hydraulic pressure controller, including: an electric motor with a center of gravity of the motor being eccentric from a center of a rotation shaft of the motor; a base; a first support point; and a second support point, characterized in that: the electric motor is secured to the base by only the first support point and the second support point; and the first and second support points are disposed so that a straight line connecting the first and second support points is offset from the center of the rotation shaft toward the center of gravity of the motor.

In other words, attention is paid to the center of gravity of the motor in the present invention and the two support points are disposed so that the straight line connecting the two support points becomes close to the center of gravity of the motor. With this configuration, the vibration of the motor can be suppressed, and noise due to the vibration can also be suppressed.

The center of gravity of the motor may be located inside a triangular area enclosed by the center of the rotation shaft and the first and second support points.

With this configuration, the vibration and noise of the motor can be suppressed further.

A length of a perpendicular line extended from the center of gravity of the motor to the straight line may be shorter than a distance from the center of the rotation shaft to the center of gravity of the motor.

With this configuration, the straight line connecting the two support points becomes closer to the center of gravity of the motor, the vibration and noise of the motor can be suppressed even further.

The motor may be secured to the base by screws.

With this configuration, since only the motor can be replaced even after the installation of the motor, repairability and recyclability can be improved.

With the vehicle brake hydraulic pressure controller according to the present invention, the vibration and noise of the motor can be suppressed.

### BRIEF DESCRIPTION OF THE DRAWINGS

The present invention will become more fully understood from the detailed description given hereinbelow and the accompanying drawings which are given by way of illustration only, and thus are not limitative of the present invention and wherein:
FIG. 1 is a perspective view showing a vehicle brake hydraulic pressure controller according to an embodiment of the present invention;
FIG. 2 is a front view showing the vehicle brake hydraulic pressure controller according to the embodiment of the present invention, also showing a partly enlarged view thereof;
FIG. 3 is a side view showing the vehicle brake hydraulic pressure controller according to the embodiment of the present invention; and
FIG. 4 is a front view showing the vehicle brake hydraulic pressure controller according to the embodiment of the present invention, in which the inner faces of holes and flow passages formed in the base of the controller are visible.

### DETAILED DESCRIPTION OF THE INVENTION

An embodiment for carrying out the present invention will be described below in detail referring to the accompanying drawings. In this embodiment, an electric motor installation structure for use in a vehicle brake hydraulic pressure controller capable of performing anti-lock brake control and traction control is taken as an example. The up-down direction in the descriptions of the embodiment indicates a direction in a state in which the vehicle brake hydraulic pressure controller is installed in a vehicle.

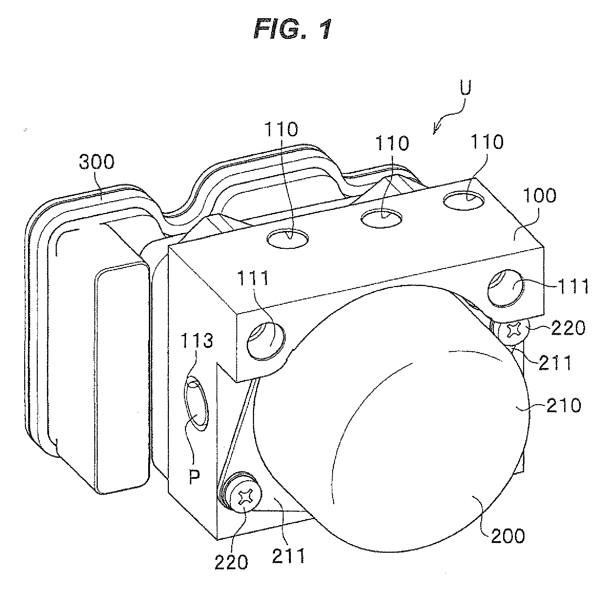

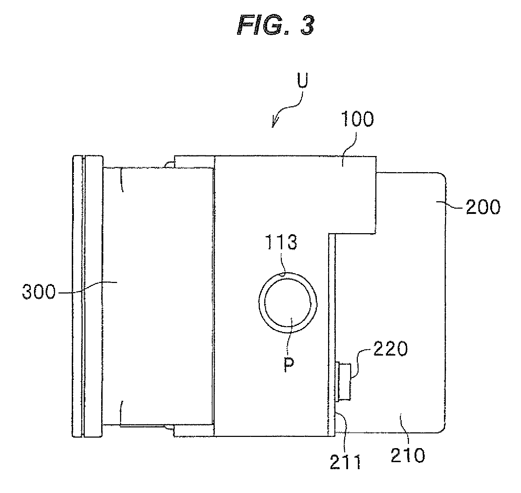

First, the configuration of a vehicle brake hydraulic pressure controller U will be described below. As shown in FIGS. 1 to 3, the vehicle brake hydraulic pressure controller U is mainly equipped with a base 100 on which various components, such as reciprocating pumps P and solenoid valves (not shown), are mounted, an electric motor (motor) 200 serving as the power source of the reciprocating pumps P, an electronic control unit (not shown) for controlling the opening/closing operation of the solenoid valves and the operation of the electric motor 200, and a control housing 300 for accommodating this electronic control unit.

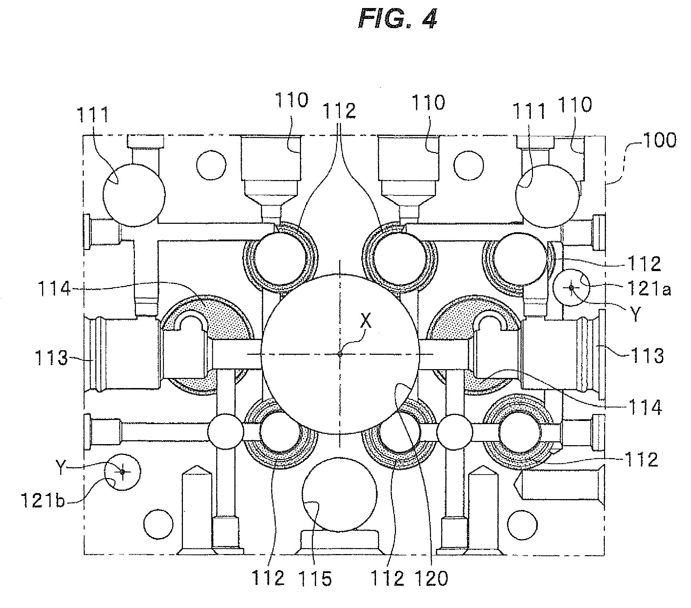

As shown in FIGS. 1 to 4, the base 100 is a metallic component formed into a nearly rectangular parallelepiped, and a flow passage (oil passage) for brake fluid is formed in the inside thereof. In addition to inlet ports 110, 110 and 110 (see FIGS. 1 and 4) to which pipes from a master cylinder, not shown, are connected and outlet ports 111 and 111 (see FIGS. 1 and 4) to which pipes leading to wheel brakes, not shown, are connected, holes (openings) 112, 112, ... (see FIG. 4) in which electronic devices, such as solenoid valves (not shown) and pressure sensors (not shown), holes (openings) 113 and 113 (see FIG. 4) in which the reciprocating pumps P are installed, holes (openings) 114 and 114 (see FIG. 4) in which reservoirs (not shown) are installed, a through hole 115(see FIG. 4) in which the motor bus bar of the electric motor 200 is inserted, etc. are formed on the respective faces of the base 100. These holes communicate with one another directly or via the flow passages formed inside the base 100.

As shown in FIGS. 1 to 3, the electric motor 200 serving as the power source of the reciprocating pumps P is integrally secured to the rear face side of the base 100. The output shaft (not shown) of the electric motor 200 is provided with an eccentric shaft portion, and ball bearings are fitted on this eccentric shaft portion. Furthermore, the motor bus bar for supplying electric power to a rotor, not shown, protrudes below the output shaft. The motor bus bar is inserted into the through hole 115 (see FIG. 4) formed in the lower portion of the base 100, and the tip end portion thereof is connected to connection terminals, not shown, provided inside the control housing 300. Since the various kinds of components of the electric motor 200 are provided offset from the center X of the rotation shaft of the motor, the center of gravity G of the motor is located at a position eccentric from the center X of the rotation shaft of the motor (at a position below the center X of the rotation shaft of the motor in the embodiment). The position of the center of gravity G of the motor is obtained by analysis or actual measurement.

The electronic control unit, not shown, in which semiconductor chips, etc. are mounted on a printed circuit board, controls the opening/closing operation of the solenoid valves and the operation of the electric motor 200 on the basis of information obtained from various kinds of sensors, such as pressure sensors and wheel speed sensors, not shown, pre-stored programs, etc.

The control housing 300 is integrally secured to the front face (the rear left side in FIG. 1) of the base 100. Electromagnetic coils for driving the solenoid valves, the connection terminals of the motor bus bar, etc. are provided inside the control housing 300, although these are not shown.

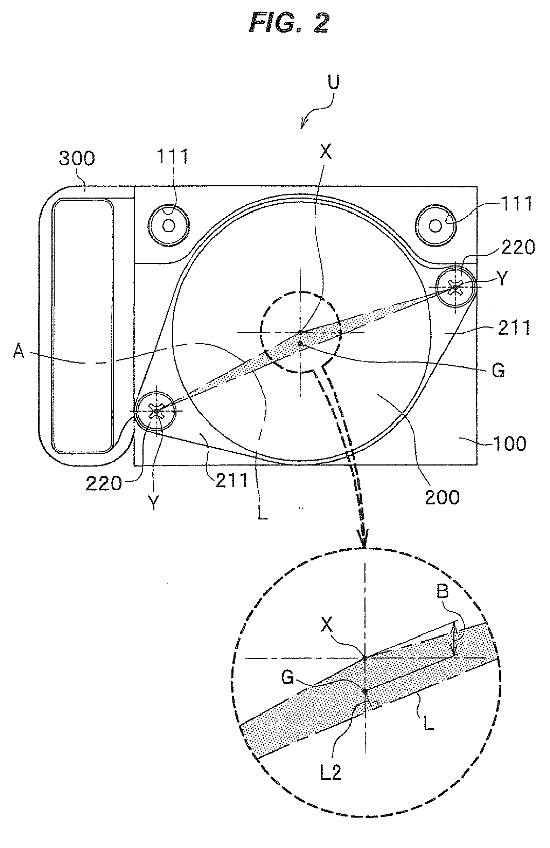

As shown in FIG. 2, the electric motor 200 is installed in a bearing hole 120 (see FIG. 4) formed on the rear face (the front right side in FIG. 1) of the base 100. The installation structure for installing the electric motor 200 in the base 100 will be described below.

As shown in FIGS. 1 to 3, the electric motor 200 is equipped with a yoke 210 having the shape of a closed-end cylinder and serving as an outer shell. The yoke 210 is formed by press working, such as deep drawing, of a metallic material, such as a steel plate. Cores (not shown) formed by winding magnet wires in slots are accommodated inside the yoke 210. The cores are fitted on the output shaft so as to be rotatable. A pair of brackets 211 and 211 extending outward in the radial direction is formed at the opening end portion of the yoke 210 such that the yoke 210 is disposed therebetween. Through holes (not shown) for screws 220 are formed in the brackets 211 and 211. The inside diameter of the through hole is slightly larger than the outside diameter of the shank portion of the screw 220 so that the shank portion of the screw 220 passes through the through hole. The screws 220, used to secure the electric motor 200 to the base 100, are inserted into the through holes of the brackets 211 of the electric motor 200 and screwed into threaded holes 121a and 121b (see FIG. 4) formed in the base 100.

As shown in FIG. 4, the threaded hole 121a, one of the threaded holes, is located on the upper side of the horizontal line passing through the center (the center X of the rotation shaft of the motor) of the bearing hole 120 of the base 100 and on the right side (on the right side in FIG. 4) from the vertical line passing through the center of the bearing hole 120 as viewed from the rear face and is formed near the side end portion of the rear face of the base 100. More specifically, the threaded hole 121a is located above the hole 113 (the hole 113 on the right side in FIG. 4) in which the reciprocating pump P is installed, on the right external side of the hole 112 (the upper right hole 112 in FIG. 4) in which the solenoid valve is installed, and below the outlet port 111 (the right side outlet port 111 in FIG. 4). Although the threaded hole 121a is shown so as to be overlapped with the flow passage (the flow passage leading to the inlet port 110) formed on the rear side thereof in FIG. 4, the threaded hole 121a does not interfere with the flow passage inside the base 100.

The other threaded hole 121b is located on the lower side of the horizontal line passing through the center (the center X of the rotation shaft of the motor) of the bearing hole 120 of the base 100 and on the left side (on the left side in FIG. 4) from the vertical line passing through the center of the bearing hole 120 as viewed from the rear face and is formed near the side end portion of the rear face of the base 100. More specifically, the threaded hole 121b is located below the hole 113 (the hole 113 on the left side in FIG. 4) in which the reciprocating pump P is installed and on the left external side of a hole 114 (a left hole 114 in FIG. 4) in which the reservoir is installed. The distance (the distance in the horizontal direction) from the center of the threaded hole 121b to the vertical line passing through the center X of the rotation shaft of the motor is equivalent to the distance (the distance in the horizontal direction) from the center of the threaded hole 121a to the vertical line passing through the center X of the rotation shaft of the motor. The distance (the distance in the vertical direction) from the center of the threaded hole 121b to the horizontal line passing through the center X of the rotation shaft of the motor is longer than the distance (the distance in the vertical direction) from the center of the threaded hole 121a to the horizontal line passing through the center X of the rotation shaft of the motor.

As described above, the electric motor 200 is secured to the base 100 so as to be supported at two points. The centers (the same positions as those of the centers of the through holes provided in the brackets 211 of the electric motor 200 secured to the base 100) of the threaded holes 121a and 121b of the base 100 serve as two support points Y and Y.

As shown in FIG. 2, the positions of the support points Y and Y are determined so that the straight line L connecting the support points Y and Y is offset on the side of the center of gravity G of the motor (on the lower side in the embodiment) from the center X of the rotation shaft of the motor. Furthermore, the center of gravity G of the motor is located inside a triangular area A enclosed by the center X of the rotation shaft of the motor and the two support points Y and Y. Moreover, the distance from the straight line L connecting the two support points Y and Y to the center of gravity G of the motor (the length of the perpendicular line L2 extended from the center of gravity G of the motor to the straight line L) is shorter than the distance B from the center X of the rotation shaft of the motor to the center of gravity G of the motor. In other words, the straight line L passes through a position near the center of gravity G of the motor, thereby being located close thereto.

Since the center of gravity G of the motor is located below the center X of the rotation shaft of the motor in the embodiment, the straight line L connecting the support points Y and Y passes through below the center X of the rotation shaft of the motor. However, in the case that the center of gravity G of the motor is located above the center X of the rotation shaft of the motor, the straight line L connecting the support points Y and Y passes through above the center X of the rotation shaft of the motor.

As described above, in the embodiment, the center of gravity G of the electric motor 200 can be located close to the straight line L connecting the two support points Y and Y, whereby the electric motor 200 can be secured to the base 100 at the support points Y and Y in a balanced manner. Hence, the eccentric moment applied to the electric motor 200 at the center of gravity G of the motor from the straight line L connecting the support points Y and Y can be decreased, and the rotational vibration of the electric motor 200 can be suppressed efficiently in the area between the two support points Y and Y. As a result, the vibration of the entire electric motor 200 can be suppressed, and noise due to the vibration can also be suppressed.

In particular, since the embodiment is configured so that the center of gravity G of the motor is located inside the triangular area A enclosed by the center X of the rotation shaft of the motor and the two support points Y and Y and so that the distance from the straight line L connecting the two support points Y and Y to the center of gravity G of the motor is shorter than the distance from the center X of the rotation shaft of the motor to the center of gravity G of the motor, the straight line L connecting the support points Y and Y becomes closer to the center of gravity G of the motor, whereby the eccentric moment applied to the electric motor 200 can be decreased further. As a result, the efficiency of suppressing the rotational vibration of the electric motor 200 can be enhanced, and the vibration and noise of the electric motor 200 can be suppressed further.

Furthermore, since the straight line L connecting the support points Y and Y is not required to pass through the center X of the rotation shaft of the motor, the degree of freedom of positioning the support points Y and Y is high. Hence, the positions of the support points Y and Y can be adjusted so as not to interfere with the holes (openings), passages, flow passages, etc. of the base 100, whereby the degree of freedom of laying out the holes (openings), flow passages, etc. of the base 100 can also be enhanced.

Moreover, since the electric motor 200 is secured to the base 100 using the screws 220 in the embodiment, the electric motor 200 can be installed and removed. Hence, even if a problem occurs in the electric motor 200 during a test after the installation of the motor, only the motor should only be replaced. Therefore, repairability is high, and defective work cost can be suppressed low. Besides, since a second-hand product can be recycled by replacing only the motor in some cases, recyclability can be improved by virtue of the configuration in which the electric motor 200 is removably secured to the base 100.

Although the embodiment according to the present invention has been described above, the present invention is not limited to the above-mentioned embodiment but can be modified appropriately in design without departing from the present invention as defined by the claims. For example, although the center of gravity G of the motor is located close to the straight line L connecting the two support points Y and Y in the embodiment, the straight line L may pass through the center of gravity G of the motor. Furthermore, although the center of gravity G of the motor is located inside the triangular area A enclosed by the center X of the rotation shaft of the motor and the two support points Y and Y in the embodiment, the center of gravity G of the motor is not limited to be located inside the triangular area A. In the case that the straight line L connecting the two support points Y and Y is offset from the center X of the rotation shaft of the motor toward the center of gravity G of the motor and located close to the center of gravity G of the motor, the center of gravity G of the motor may be located outside the triangular area A.

Still further, although the electric motor 200 is secured to the base 100 using the screws 220 in the embodiment, the present invention is not limited to this configuration. For example, locking devices, such as bolts other than the screws, may also be used, or portions of the base may be deformed plastically and swaged so as to hold and secure the electric motor between the portions. However, such locking devices as those used to removably secure the electric motor 200 in the embodiment are preferable in consideration of repairability and recyclability.

## Claims

1. A vehicle brake hydraulic pressure controller (u), comprising:
an electric motor (200) with a center of gravity (G) of the motor being eccentric from a center (X) of a rotation shaft of the motor;
a base (100);
a first support point (121a, Y); and
a second support point (121b, Y),
wherein the electric motor (200) is secured to the base (100) by only the first support point (121a, Y) and the second support point (121b, Y),
the controller being **characterized in that**: the first and second support points (121a, 121b, Y, Y) are disposed so that a straight line (L) connecting the first and second support points is offset from the center (X) of the rotation shaft toward the center of gravity (g) of the motor (200).

2. The vehicle brake hydraulic pressure controller according to claim 1, wherein
the center of gravity (G) of the motor (200) is located inside a triangular area enclosed by the center (X) of the rotation shaft and the first and second support points (Y, Y).

3. The vehicle brake hydraulic pressure controller according to claim 1 or 2, wherein
a length of a perpendicular line (L2) extended from the center of gravity (G) of the motor (200) to the straight line (L) is shorter than a distance from the center (X) of the rotation shaft to the center of gravity (G) of the motor (200).

4. The vehicle brake hydraulic pressure controller according to claim 1, 2 or 3, wherein
the motor (200) is secured to the base (100) by screws (220).

## Patentansprüche

1. Hydraulisches Fahrzeugbremse-Drucksteuergerät (u), mit:
einem Elektromotor (200), wobei ein Schwerpunkt (G) des Motors exzentrisch von einer Mitte (X) einer Drehwelle des Motors ist;
einer Basis (100);
einem ersten Stützpunkt (121a, Y); und
einem zweiten Stützpunkt (121b, Y),
wobei der Elektromotor (200) an der Basis (100) lediglich durch den ersten Stützpunkt (121a, Y) und den zweiten Stützpunkt (121b, Y) befestigt ist,
wobei das Steuergerät **dadurch gekennzeichnet ist, dass**: die ersten und zweiten Stützpunkte (121a, 121b, Y, Y) so angeordnet sind, dass eine gerade Linie (L), welche die ersten und zweiten Stützpunkte verbindet, von der Mitte (X) der Drehwelle zu dem Schwerpunkt (g) des Motors (200) hin versetzt ist.

2. Hydraulisches Fahrzeugbremse-Drucksteuergerät nach Anspruch 1, wobei
sich der Schwerpunkt (G) des Motors (200) im Inneren eines dreieckigen Bereichs befindet, der durch die Mitte (X) der Drehwelle und die ersten und zweiten Stützpunkte (Y, Y) umschlossen ist.

3. Hydraulisches Fahrzeugbremse-Drucksteuergerät nach Anspruch 1 oder 2, wobei
eine Länge einer senkrechten Linie (L2), die von dem Schwerpunkt (G) des Motors (200) zu der geraden Linie (L) verlängert ist, kürzer als ein Abstand von der Mitte (X) der Drehwelle zu dem Schwerpunkt (G) des Motors (200) ist.

4. Hydraulisches Fahrzeugbremse-Drucksteuergerät nach Anspruch 1, 2 oder 3, wobei
der Motor (200) an der Basis (100) durch Schrauben (220) befestigt ist.

## Revendications

1. Dispositif de commande de pression hydraulique de frein de véhicule (u), comprenant :
un moteur électrique (200), un centre de gravité (G) du moteur étant excentrique par rapport à un centre (X) d'un arbre de rotation du moteur ;
une base (100) ;
un premier point de support (121a, Y) ; et
un deuxième point de support (121b, Y),
dans lequel le moteur électrique (200) n'est fixé à la base (100) que par le premier point de support (121a, Y) et par le deuxième point de support (121b, Y),
le dispositif de commande étant **caractérisé en ce que** : les premier et deuxième points de support (121a, 121b, Y, Y) sont disposés de sorte qu'une ligne droite (L) reliant les premier et deuxième points de support soit décalée du centre (X) de l'arbre de rotation en direction du centre de gravité (g) du moteur (200).

2. Dispositif de commande de pression hydraulique de frein de véhicule selon la revendication 1, dans lequel :
le centre de gravité (G) du moteur (200) est situé à l'intérieur d'une zone triangulaire entourée par le centre (X) de l'arbre de rotation et les premier et
deuxième points de support (Y, Y).

3. Dispositif de commande de pression hydraulique de frein de véhicule selon la revendication 1 ou 2, dans lequel :
une longueur d'une ligne perpendiculaire (L2) qui s'étend du centre de gravité (G) du moteur (200) à la ligne droite (L) est plus courte qu'une distance allant du centre (X) de l'arbre de rotation au centre de gravité (G) du moteur (200).

4. Dispositif de commande de pression hydraulique de frein de véhicule selon la revendication 1, 2 ou 3, dans lequel :
le moteur (200) est fixé à la base (100) par des vis (220).
